# FASCICULE DE BREVET EUROPEEN

(11) **EP 2 038 082 B1**
(45) Date de publication et mention de la délivrance du brevet: **16.02.2011**
(21) Numéro de dépôt: 06778863.8
(22) Date de dépôt: 07.07.2006
(51) Int. Cl.: B22D 11/12

(54) **PROCEDE DE COULEE CONTINUE DE PRODUITS METALLIQUES PLATS A BRASSAGE ELECTROMAGNETIQUE ET INSTALLATION DE MISE EN UVRE**
VERFAHREN ZUM STRANGGIESSEN VON FLACHEN METALLPRODUKTEN MIT ELEKTROMAGNETISCHEM RÜHREN UND ANLAGE ZUR DURCHFÜHRUNG
PROCESS FOR THE CONTINUOUS CASTING OF FLAT METAL PRODUCTS WITH ELECTROMAGNETIC STIRRING AND IMPLEMENTATION INSTALLATION

(43) Date de publication de la demande: 25.03.2009
(73) Titulaire: ROTELEC, 93170 Bagnolet (FR)
(72) Inventeur: KUNSTREICH, Siebo, F-93400 Saint-Ouen (FR); YVES, Dominique, F-75017 Paris (FR)
(74) Mandataire: Ventavoli, Roger
(86) Numéro de dépôt international: PCT/FR2006/001693
(87) Numéro de publication internationale: WO 2008/003838

(56) Documents cités:
- EP-B2- 0 097 561
- AT-B- 331 436
- J-P BIRAT, P.NEU, J.C. DHUYVETTER, M JEANNEAU: "Utilisation de rouleaux brasseurs IRSID-CEM sur la machine de coulée d'Usinor Dunkerque produisant des brames pour tôles fortes" CAHIER D'INFORMATIONS TECHNIQUES DE LA REVUE DE MÉTALLURGIE, vol. 80, no. 2, février 1983 (1983-02), pages 119-135, XP002423985 Paris ISSN: 0035-1563

## Description

La présente invention se situe dans le domaine de la coulée continue des métaux, notamment de l'acier. Elle concerne plus particulièrement la coulée continue de produits plats: brames et autres produits similaires à section droite allongée, au cours de laquelle on met en oeuvre des champs magnétiques mobiles agissant sur le métal coulé en fusion pour améliorer la qualité du produit coulé obtenu et/ou les conditions ou les performances du processus de coulée lui-même:

On rappelle brièvement que l'opération de coulée continue consiste à verser un métal en fusion par le haut dans une lingotière sans fond essentiellement constituée d'un corps de lingotière métallique (en cuivre ou alliage de cuivre), généralement à plaques assemblées pour la coulée de produits plats, définissant un passage pour le métal coulé. Les parois sont énergiquement refroidies par circulation d'eau de manière à extraire en continu par le bas de cette lingotière un produit déjà solidifié extérieurement sur plusieurs millimètres d'épaisseur. La solidification progresse et s'achève ensuite de la périphérie jusqu'à l'axe du produit au cours de la descente de celui-ci en aval de la lingotière dans la zone dite de "refroidissement secondaire", zone dans laquelle le produit coulé, guidé par des rouleaux de soutien et de guidage (ci-après appelés rouleaux de soutien), est soumis à une aspersion d'eau pour assurer l'extraction calorifique nécessaire à sa solidification complète. Le produit solidifié ainsi obtenu est ensuite découpé à longueur, puis laminé avant expédition à la clientèle ou transformation sur place en plaques, tôles, etc.

Dans le cas de produits métalliques plats, de section droite allongée donc, appelés communément brames, il est déjà connu depuis longtemps de pratiquer un brassage électromagnétique du métal en fusion dans la zone de refroidissement secondaire de l'installation de coulée continue.

Schématiquement, le brassage électromagnétique consiste, comme on le sait, à soumettre la brame à un ou plusieurs champs magnétiques mobiles (c'est à dire de champs dont l'intensité maximale se déplace avec le temps dans une direction déterminée de l'espace) et dont l'action sur le métal en fusion se manifeste alors par un entraînement de ce dernier identique, en sens et direction, au déplacement du champ magnétique.

Dans le cas de la coulée de produits plats, on entraîne généralement le métal liquide à l'aide de champs magnétiques mobiles linéairement, dits glissants, dans un mouvement de translation horizontale parallèle aux grandes faces du produit.

Le champ magnétique glissant est créé par un inducteur linéaire polyphasé disposé aussi près que possible de la brame afin de maximiser le couplage électromagnétique avec celle-ci.

A cet effet, l'inducteur peut être monté soit derrière les rouleaux de soutien, solution appelée "box-type stirrer" ou "brasseur box-type", soit à l'intérieur d'un rouleau de soutien, rendu creux à cet effet, de la zone de refroidissement secondaire, solution appelée "in-roll stirrer" ou "rouleau-brasseur". On trouvera des explications détaillées à ce propos notamment dans l'article de J-P. Birat et al. "Utilisation de rouleaux brasseurs...... brames pour tôles fortes" paru dans les "Cahiers d'Informations Techniques de la Revue Metallurgique, vol. 80, n° 2 de février 1983, p. 119 à 135 (Paris ISSN:0035-1563)

Les deux solutions coexistent sur le marché depuis le début des années 1980 et étaient utilisées dès l'origine pour améliorer la santé interne du métal coulé. Grâce au brassage en effet, une interruption de la croissance cristalline naturelle de type "dendritique" de l'extérieur vers et jusqu'au voisinage de l'axe du produit intervenait au profit du développement d'une structure de solidification non-orientée plus fine, dite "équiaxe". On obtenait ainsi une réduction de la porosité centrale et une diminution conjointe des macro-ségrégations axiales (voir le brevet européen 0 097 561). Cette amélioration de la santé interne était recherchée essentiellement pour des nuances d'aciers qui sont laminées à faible taux de corroyage pour devenir des tôles fortes.

Il a été découvert que pour réaliser, dans la zone du refroidissement secondaire d'une machine de coulée de brames d'acier, un brassage optimal quant à la santé interne du produit obtenu, il convenait de brasser, non pas en une seule position localisée, mais au contraire au moins deux fois sur la hauteur métallurgique, c'est-à-dire de faire du brassage étagé.

C'est ce que propose précisément l'EP 0 097 561 B2 précité, qui décrit un procédé de brassage électromagnétique de brames d'acier coulées en continu, selon lequel on fait agir une pluralité de champs magnétiques glissants produits par des paires de rouleaux-brasseurs étagés sur la hauteur métallurgique en espacant de 1 à 2 mètres la paire supérieure de la paire inférieure. Ainsi, sur la base d'un jeu de quatre rouleaux-brasseurs en tout, la paire de rouleaux-brasseurs la plus proche de la lingotière est située à environ 5 à 7 m sous la surface libre du métal liquide en lingotière et la seconde paire de rouleaux-brasseurs située le plus proche du fond du puits de solidification est placée à environ 4 à 6 m de ce fond. L'alimentation électrique des rouleaux est en outre réglée de sorte que le champ magnétique créé par la paire supérieure glisse dans un sens opposé de celui des champs magnétiques créés par la paire inférieure.

Conformément à cet enseignement, les rouleaux-brasseurs sont ainsi montés dans la région de la zone du refroidissement secondaire appelés segments inférieurs de la machine de coulée. Ils y sont substitués aux rouleaux de soutien normalement prévus à ces endroits et ont donc une géométrie, notamment un diamètre externe, identique, en tous cas approximativement identique, à celle des rouleaux voisins, qui dans cette zone du refroidissement secondaire ont typiquement un diamètre d'au moins 230 mm.

Le brassage étagé est généralement réalisé avec des rouleaux-brasseurs, bien qu'en principe il pourrait être réalisé également avec deux brasseurs "box-type". Mais, ces derniers sont nettement plus chers, car ils demandent environ cinq fois plus de puissance électrique à cause de leur éloignement de la surface de la brame, de sorte que le brassage étagé avec des inducteurs "box-type" aurait un coût prohibitif.

Cette technique de brassage électromagnétique dans la zone de refroidissement secondaire, pourtant très largement répandue de part le monde pour améliorer la qualité des tôles fortes, a été remplacée dans les années 1990 par une technique concurrente dite de la "réduction mécanique douce". Celle-ci s'assimile en fait à un laminage doux déjà dans la machine de coulée afin de forcer le rapprochement entre eux des fronts de solidification de chacune des grandes faces de la brame et réduire ainsi les porosités centrales et la ségrégation centrale plus efficacement qu'avec le brassage électromagnétique.

Dès lors, le brassage électromagnétique dans la zone de refroidissement secondaire n'est pratiquement plus utilisé de nos jours que pour des aciers inoxydables et les aciers au silicium et ce avec un objectif métallurgique différent. Il existe en effet un problème propre à la coulée continue de ces nuances d'aciers pour lesquels on observe souvent sur les produits obtenus après laminage ou étirage des défauts de surface de type "roping" ou "ridging", qui se traduisent par un aspect de surface ondulée. Une telle surface est optiquement insatisfaisante pour les aciers inoxydables, et, pour les aciers au silicium, crée des défauts de compacité des empilements dans la réalisation des feuillards pour culasses de transformateurs ou de moteurs.

Il est toutefois déjà connu que ce problème de "roping" et de "ridging" peut être éliminé si la brame présentait une structure de solidification dotée d'une très large fraction, c'est-à-dire d'au moins 50% environ, de type équiaxe. Théoriquement, on pourrait obtenir un tel résultat en coulant le métal avec une surchauffe extrêmement basse, mais en pratique, cela est impossible en coulée continue et nécessite donc du brassage électromagnétique pour évacuer rapidement cette surchauffe.

Contrairement aux tôles fortes, pour lesquelles il fallait minimiser les porosités et ségrégations axiales, il s'agit ici de maximiser la largeur de la fraction de solidification de type équiaxe. C'est la raison pour laquelle le brassage doit être remonté vers le haut dans la zone de refroidissement secondaire pour se situer plus près de la lingotière dans le segment zéro de la machine de coulée.

On rappelle que le segment zéro est celui qui reçoit le produit coulé directement à la sortie des rouleaux de pied de la lingotière. Il définit une portion particulière de la hauteur métallurgique qui s'étend de la sortie de lingotière sur une distance, de 3 à 4 m environ. Cette portion, formée par une batterie serrée de rouleaux de soutien de faible diamètre (typiquement de l'ordre de 150 mm) est considérée comme particulièrement critique par les constructeurs de machine de coulée. Elle l'est notamment pour ce qui concerne le faible espacement entre les génératrices de contact et la régularité du soutien mécanique de la brame, dont la peau de métal solidifiée, encore relativement peu épaisse, risque de gonfler dans l'espacement entre deux soutiens mécaniques successifs, car elle est soumise à une pression ferrostatique déjà élevée à cet endroit. C'est donc pour ne pas modifier localement la régularité et le faible espacement de soutien de la brame dans le segment zéro que le brassage électromagnétique y est proposé au moyen d'inducteurs "box-type", placés derrière ces petits rouleaux de soutien, alors que l'implantation de rouleaux-brasseurs à diamètre sensiblement plus grand impliquerait une discontinuité dans l'espacement des rouleaux de soutien.

Toutefois, le brassage "box-type" requiert que toute structure métallique présente entre l'inducteur et la brame soit en acier amagnétique pour ne pas faire écran au champ magnétique agissant. Ceci implique la modification du segment zéro lorsqu'il s'agit d'implanter le brassage dans des machines existantes ou un segment zéro spécialement conçu, donc plus cher, lorsqu'il s'agit de machines neuves. En outre, malgré le faible diamètre de l'ordre de 150 mm des rouleaux de soutien dans le segment zéro, la distance entre la brame et l'inducteur "box-type" ne peut pas être réduite en dessous de 270 à 250 mm du fait de la structure mécanique derrière les rouleaux de soutien qui supporte les paliers intermédiaires de ces rouleaux. Comme on l'a déjà expliqué plus haut, cet éloignement imposé entre inducteur et produit coulé dégrade fortement le couplage électromagnétique entre les deux et nécessite en compensation une forte augmentation de la puissance électrique.

L'état de la technique pour aciers inoxydables et aciers au silicium est donc caractérisé par (i) le brassage localisé en segment zéro de la machine de coulée pour obtenir une largeur de zone équiaxe d'environ 50% et plus de l'épaisseur de la brame, (ii) l'utilisation d'inducteurs "box-type" derrière les petits rouleaux de soutien pour ne pas modifier localement le diamètre et la position de ceux-ci, (iii) par conséquent, la limitation à un brassage unique non étagé pour des raisons de coût alors que le brassage étagé donne de meilleures résultats, et (iv) l'impossibilité de faire varier la position du brasseur pour un segment zéro donné.

Le but de la présente invention est de proposer, pour la réalisation d'un brassage électromagnétique dans le segment zéro, une solution qui ne présente pas les inconvénients mentionnés ci-dessus.

A cet effet, la présente invention a pour objet un procédé de coulée continue de produits plats avec brassage électromagnétique par champ magnétique glissant selon la largeur des grandes faces du produit coulé et qui se caractérise en ce que, dans le but d'obtenir un produit coulé présentant une structure de solidification majoritairement équiaxe (c'est-à-dire supérieure à 50 % de l'épaisseur de la brame), on effectue ledit brassage électromagnétique au niveau du segment zéro de la zone de refroidissement secondaire de la machine de coulée à l'aide d'au moins deux rouleaux-brasseurs insérés parmi des rouleaux de soutien de la batterie qui compose ledit segment et générant des champs magnétiques glissant dans le même sens.

Cette structure de solidification interne majoritairement équiaxe améliore le comportement du métal pendant le laminage et évite les défauts du type roping et ridging, ce qui rend le procédé selon l'invention particulièrement bien adapté à la coulée continue de produits plats en acier inoxydable ferritique ou en acier au silicium. Le procédé est cependant bien entendu également applicable aux aciers au carbone en général.

Outre l'effet sur la structure de solidification de la brame, le brassage au niveau du segment zéro est avantageux en ce qu'il permet un meilleur contrôle de la surchauffe du métal à la coulée.

On notera qu'en utilisant des rouleaux-brasseurs dans le segment zéro, qui viennent donc prendre la place de rouleaux de soutien dont le diamètre est sensiblement plus petit, le procédé selon l'invention va à l'encontre de la pratique habituelle qui veut que le segment zéro soit exclusivement constitué de petits rouleaux pour maximiser le nombre de génératrices de contact avec la surface de la brame en cours de coulée, donc le soutien mécanique de cette dernière, et qui veut qu'une discontinuité dans le diamètre des rouleaux de soutien, impliquant une discontinuité dans le soutien de la brame, provoque inexorablement un excès de gonflement ("buldging") de la brame, à l'origine des criques observées dans la peau solidifiée.

Les inventeurs ont démontré en fonctionnement industriel que, contrairement à la doctrine de l'homme de l'art spécialiste en coulée continue de produits à section droite allongée, il est tout à fait possible d'implanter des inducteurs au niveau du segment zéro de la machine de coulée en remplaçant les petits rouleaux de soutien par des rouleaux-brasseurs et en induisant de ce fait une discontinuité dans le soutien de la brame sans pour autant compromettre en aucune manière le processus de coulée continue et notamment sans produire des criques. Apparemment, il semble bien que ce soit l'effet de la mise en mouvement du métal liquide par le brassage qui empêche la formation de criques bien que le gonflement de la brame soit localement plus fort.

Selon la variante de base de la présente invention, les rouleaux-brasseurs sont utilisés par paire.

Pour favoriser une concentration du champ magnétique à travers la brame, les deux rouleaux brasseurs constitutif d'une paire seront placés au même niveau face à face, chacun sur une grande face de la brame. En revanche, pour favoriser une augmentation de la longueur d'action du brassage dans le sens de la coulée, ils seront placés côte à côte, en voisins directs, l'un au dessus de l'autre pour s'appuyer sur la même grande face de la brame.

Selon une autre variante, lorsque une puissance de brassage très élevée est requise pour des applications particulières, on utilise deux paires de rouleaux-brasseurs groupés voisins, donc deux rouleaux disposés côte à côte l'un au dessus de l'autre sur chacune des deux grandes faces de brame,

Selon une variante préférentielle, on choisira le diamètre des rouleaux brasseurs tel que deux rouleaux brasseurs placés côte à côte prendront approximativement la place de trois rouleaux de soutien consécutifs. Cette importante disposition permet d'implanter l'une quelconque des variantes de réalisation précitées dans le même segment zéro, de pouvoir garder inchangé l'emplacement, de chaque côté de la brame, de tous les rouleaux de soutien sauf trois successifs (ceux qui sont remplacés), ainsi que de maintenir constante la longueur totale du segment zéro.

A titre d'exemple, pour des rouleaux de soutien de diamètre 150 mm disposés avec un entre-axe de 180 mm (espace libre entre deux rouleaux de 30 mm), on utilisera un espace de 3 x 150 mm + 2 x 30 mm, soit 510 mm pour installer deux rouleaux brasseurs de diamètre 2 x D + 30 mm = 510mm, donc D = 240 mm.

Le choix du diamètre des rouleaux brasseurs de 240 mm dans l'exemple choisi permet donc de modifier un segment zéro de sorte à pouvoir implanter soit une paire face à face, soit une paire côte à côte, soit encore deux paires groupées de rouleaux brasseurs sans changer la longueur du segment zéro et la position des autres rouleaux de soutien classiques.

On aura compris que le choix du diamètre extérieur D des rouleaux brasseurs sera approximativement donné par la formule 2D + e = 3d + 2e où e est l'espace entre deux rouleaux, approximativement identique pour les rouleaux brasseurs et les rouleaux de soutien, et d est le diamètre des rouleaux de soutien.

Cette flexibilité dans le choix de la configuration de brassage est un aspect particulièrement important de invention, puisque l'exploitant de la coulée continue peut alors aisément optimiser les résultats métallurgiques selon le choix d'une paire de rouleaux brasseurs face à face, côte à côte ou de deux paires groupées.

La présente invention a également pour objet une installation de coulée continue de produits plats, qui comprend une lingotière et une zone de refroidissement secondaire en aval de celle-ci, et dans laquelle le segment zéro de la zone de refroidissement secondaire comprend au moins deux rouleaux-brasseurs insérés parmi des rouleaux de soutien habituels qui composent ce segment.

Selon un mode préférentiel de réalisation, le diamètre des rouleaux brasseurs est choisi selon la formule expliquée ci-dessus 2D + e = 3d + 2e afin de pouvoir implanter soit deux rouleaux brasseurs face à face, soit côte à côte soit quatre rouleaux brasseurs groupés par deux sur chaque grande face.

Il se trouve que l'effet de brassage dépend fortement de la position du brasseur dans le segment zéro, c'est-à-dire de la distance qui sépare le brasseur de la lingotière. La position optimale sera choisie en fonction du profil de solidification de la brame, qui lui dépend des conditions de coulée telles que vitesse de coulée, intensité de refroidissement, surchauffe de l'acier, etc... Par exemple, lorsque la vitesse de coulée est lente, on installera de préférence le brasseur dans la partie plus haute du segment zéro. Après avoir choisi la position et adapté un segment zéro pour y installer un brasseur à cette position, (peut importe ici s'il s'agit d'un brasseur "box-type" ou de rouleaux brasseurs), on devra alors impérativement reproduire toujours les mêmes conditions de coulée pour que le profil de solidification reste inchangé et que la position choisie reste la bonne. On aura ainsi perdu la flexibilité de modifier les paramètres de coulée, ou il faudra sinon changer à nouveau le segment zéro.

Aussi, conformément à une réalisation avantageuse de l'installation, la structure du segment zéro est conçue de façon à pouvoir changer la position des rouleaux brasseurs en gardant le même segment zéro.

A cet effet, on n'utilise plus une poutre d'appui principale habituelle, sur laquelle chaque rouleau est appuyé et son palier fixé de façon appropriée, mais on groupe chaque fois trois rouleaux de soutien sur une semelle d'appui, ces semelles étant elles mêmes appuyées et fixées sur la poutre d'appui principale. La hauteur de la semelle est égale à l'excédant de la hauteur du rouleau-brasseur avec son palier par rapport au rouleau de soutien et son palier.

Une telle structure de semelles d'appui amovible rigidement fixées sur la poutre principale offre la flexibilité structurelle de pouvoir remplacer n'importe quel des triplets de rouleaux de soutien par un doublé de rouleaux de plus grand diamètre, soit une paire de rouleaux brasseurs, soit un rouleaux brasseur et un rouleau factice du même diamètre, selon que l'on utilise une paire de rouleaux brasseurs face à face, côte à côte ou deux paires groupées.

Cette flexibilité dans le choix de l'emplacement et la facilité de montage est un aspect de invention qui peut s'avérer particulièrement important, puisque l'exploitant de la coulée continue peut alors aisément optimiser la position des rouleaux-brasseurs dans le segment zéro lorsqu'il aura modifié ses conditions de coulé.

D'autres particularités et caractéristiques de l'invention ressortiront mieux de la description détaillée qui suit de quelques modes de réalisation présentés à titre d'illustration, en se référant aux planches de dessins annexées, sur lesquelles:
- les figures 1a et 1b sont une vue schématique en perspective de la partie haute d'une machine de coulée continue avec lingotière et segments de la zone de refroidissement secondaire;
- les figures 2a et 2b montrent le choix du diamètre D des rouleaux brasseurs et rouleaux factices en fonction du diamètre d des rouleaux de soutien et de leur écartement;
- les figures 3a à 3e montrent chacune la batterie de rouleaux de soutien du segment zéro avec insertion de quatre rouleaux-brasseurs groupés de diamètre plus grand, et l'une des cinq configurations de brassage pouvant être réalisées dans le segment zéro;
- la Figure 4 représente la conception du segment zéro avec sa structure d'appui divisée en semelles et poutre principale selon l'invention.

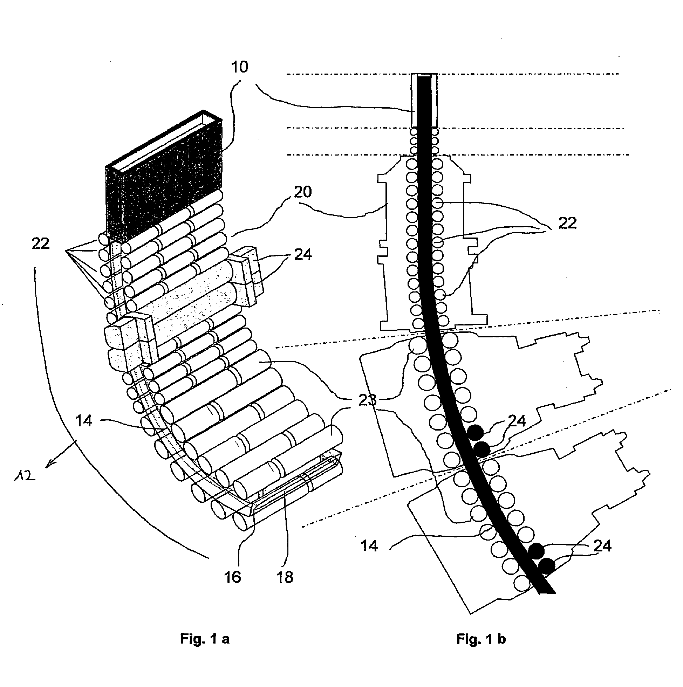

On a schématisé sur la Fig.1 une installation de coulée continue de brames en acier comprenant une lingotière 10 et, en aval de celle-ci, une zone de refroidissement secondaire 12. La lingotière 10, du type à plaques assemblées dont les grandes plaques sont énergiquement refroidies par circulation d'eau sur leur surface externe, définit un passage de coulée de section allongée, rectangulaire, imposant son format à la brame brute de coulée qui sera produite. La lingotière est alimentée par le haut en métal en fusion au moyen d'une busette immergée (non représentée), et l'on extrait en continu de la lingotière 10 une ébauche de brame 14 partiellement solidifiée extérieurement. A la sortie de la lingotière, la brame 14 pénètre dans la zone de refroidissement secondaire 12, où elle est guidée et soutenue par des rouleaux de soutien, tout en étant refroidie par des jets d'eau (non montrés).

On notera que la Fig.1a ne représente que la partie de la zone de refroidissement secondaire 12 qui correspondant aux régions communément appelées "segments zéro", et "segment 1", la figure 1b en plus le "segment 2", soit une hauteur métallurgique d'environ 7 à 8 m. Dans cette partie du refroidissement secondaire 12, la brame 14 n'est que partiellement solidifiée et comprend donc une peau solidifiée 16 encore assez fine et un large coeur liquide 18.

Pour mémoire, le segment zéro, indiqué 20 sur la Fig.1, correspond à la région du refroidissement secondaire 12 directement sous la lingotière 10, et qui s'étend sur une distance de l'ordre de 3 m. Le segment zéro comprend classiquement des rouleaux de guidage, indiqués 22, de petit diamètre, généralement de l'ordre de 150 mm. Leur nombre est typiquement entre 8 et 16 sur chacune des grandes faces de la brame.

Les segments 1, 2,... etc. correspondent donc à des régions du refroidissement secondaire en aval du segment zéro, et qui sont typiquement équipées de rouleaux de guidage et de soutien 23 de diamètre plus élevé. Par exemple, les segments 1 et 2, s'étendent chacun sur une distance de l'ordre de 1,5 à 2 m après le segment zéro
La Figure 1a représente une paire de rouleaux-brasseurs 24 en configuration côte à côte en position relativement proche de la lingotière tel qu'utilisée pour le brassage des aciers inoxydables et au silicium, ce qui permet de produire une brame 14 avec une large fraction de solidification équiaxe, supérieure à 50 % en épaisseur, conformément au présent procédé.
La figure 1b par contre montre un brassage étagé avec une paire de rouleaux brasseurs 24 côte à côte dans le segment 1 et une deuxième paire 24 dans le segment 2, en position relativement basse utilisé habituellement pour les aciers à tôle forte.
La figure 1b représente une machine de coulée moderne, dont la lingotière est munie de rouleaux de pied, la lingotière et la première partie du segment zéro sont rectilignes verticales, le segment zéro est relativement long et la courbure du refroidissement secondaire est amorcée en partie basse du segment zéro.
La figure 1a présente une machine de coulée plus ancienne avec un segment zéro plus court, entièrement courbe. Ce type de machines possède souvent des lingotières courbes.

Comme on le sait, les rouleaux-brasseurs sont, de manière schématique, des rouleaux de guidage et soutien rendus tubulaires pour contenir un inducteur électromagnétique à champ glissant qui est donc placé très prés de la brame. Les rouleaux brasseurs ont typiquement un diamètre supérieur à 230 mm, qui est donc sensiblement plus grand que celui d'un rouleau du segment zéro. Les détails de conception de ces rouleaux-brasseurs ne faisant toutefois pas partie propre de l'invention et étant bien connus dans le domaine, on ne les décrira pas ici en détail. On pourra par exemple se référer au EP 0 053 060 pour plus de détails sur leur conception et technologie, notamment concernant l'inducteur.

L'utilisation du brassage au niveau du segment zéro se situe dans une position qui comporte encore une partie majoritairement liquide d'acier dans le sens de l'épaisseur de la brame. Ceci permet donc de produire une solidification majoritairement équiaxe dont l'épaisseur correspond à plus de 50% de l'épaisseur de la brame, cette zone centrale équiaxe étant bordée par deux zones colonnaires (ou dentritiques). Une structure cristalline majoritairement équiaxe permet d'éviter les problèmes de roping et de ridging qui sont observés après laminage avec des nuances d'aciers du type inox ferritique ou silicium.

L'utilisation de rouleaux brasseurs à la place de brasseur "box-type (non représenté) permet d'installer l'inducteur beaucoup plus proche de la brame, d'obtenir par conséquent un meilleur couplage électromagnétique et de réduire dans un rapport de cinq environ les besoins en puissance électrique, donc de réaliser un brassage nettement moins coûteux.

Le coût d'un seul brasseur "box-type" est en effet généralement supérieur au coût de quatre rouleaux brasseurs, ce qui permet à moindre frais d'utiliser du brassage étagé, deux rouleaux brasseurs en segment zéro suivis de deux rouleaux brasseurs en segment un ou deux. Le brassage étagé donne des meilleures résultats qu'un seul brasseur, car il génère un mouvement de l'acier liquide plus étendu dans le refroidissement secondaire, obtient de ce fait un meilleur échange entre l'acier plus chaud en haut et plus froid en bas du refroidissement secondaire et évacue mieux la surchauffe de l'acier. On obtient donc de meilleurs résultats métallurgiques tout en gagnant en flexibilité opérationnelle de la coulé car on peut accepter de couler à des surchauffes supérieures.

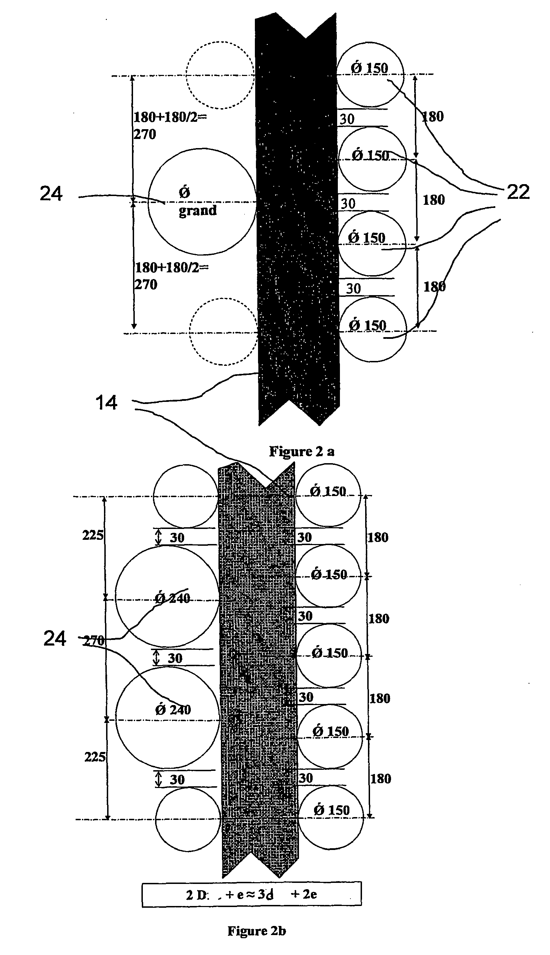

Figure 2 illustre la difficulté d'insérer dans le segment zéro des rouleaux de diamètre sensiblement plus grand. A titre d'exemple, on a choisi pour les rouleaux de soutien (22) un diamètre de 150 mm et un entraxe de 180 mm.. L'insertion d'un seul rouleau brasseur (24) dans la batterie des rouleaux de soutien (22) nécessite d'enlever deux rouleaux de soutien (22), ce qui augmente l'écart de soutien de 180 à 270 mm. (Figure 2a). Deux écarts de 270 mm parmi la batterie de 180 mm sont jugés prohibitifs pour des raisons de gonflement de brame. Pour la configuration d'une paire de rouleaux brasseurs face à face, on pourrait diminuer cet écart de 270 à 225 mm, ce qui serait acceptable du point de vue du gonflement de brame, mais cela nécessiterait de raccourcir la longueur du segment zéro de 2 x (270-225) = 90 mm, ce qui n'est pas possible pour une machine de coulée existante, car il faudrait redessiner l'ensemble de la zone de refroidissement secondaire. On pourrait encore repartir les 90 mm sur l'ensemble des rouleaux de soutient, mais cela nécessiterait de réajuster tous les rouleaux, donc de faire un segment zéro nouveau. Et, dans tous les cas, on serait limité à la configuration d'une paire de rouleaux brasseurs face à face.

Si on veut rester libre de pouvoir utiliser une paire de rouleaux brasseurs en configuration face à face ou côte à côte, voir même utiliser deux paires de rouleaux groupés lorsque une application spéciale demanderait un surplus de puissance de brassage, il faut insérer deux rouleaux-brasseurs (24) dans la batterie des rouleaux de soutien (22) tel que montré dans la figure 2(b).

Le diamètre devra alors être choisi selon la formule: 2D + e ≈ 3d + 2 e, ou D et d sont les diamètres des rouleaux-brasseurs (24) respectivement des rouleaux de soutien (22) et e est l'écart entre rouleaux, pris approximativement égal pour les rouleaux-brasseurs et pour les rouleaux de soutien. Dans l'exemple choisi, on obtient 240 mm pour le diamètre D des rouleaux-brasseurs. L'écart de soutien de la brame changera successivement de 180 mm à 225 mm, 270 mm, puis 225 mm et 180 mm, ce qui est bien meilleur au niveau du gonflement de la brame que la suite 180, 270, 270 et 180 mm de l'exemple de la figure 2a.

En somme, en choisissant le diamètre D des rouleaux-brasseurs en fonction du diamètre d des rouleaux de soutien selon la formule ci-avant et en insérant quatre rouleaux de ce diamètre D, on aura obtenu une situation plus favorable pour le gonflement de brame et la flexibilité de pouvoir changer de configuration de brassage avec un même segment zéro.

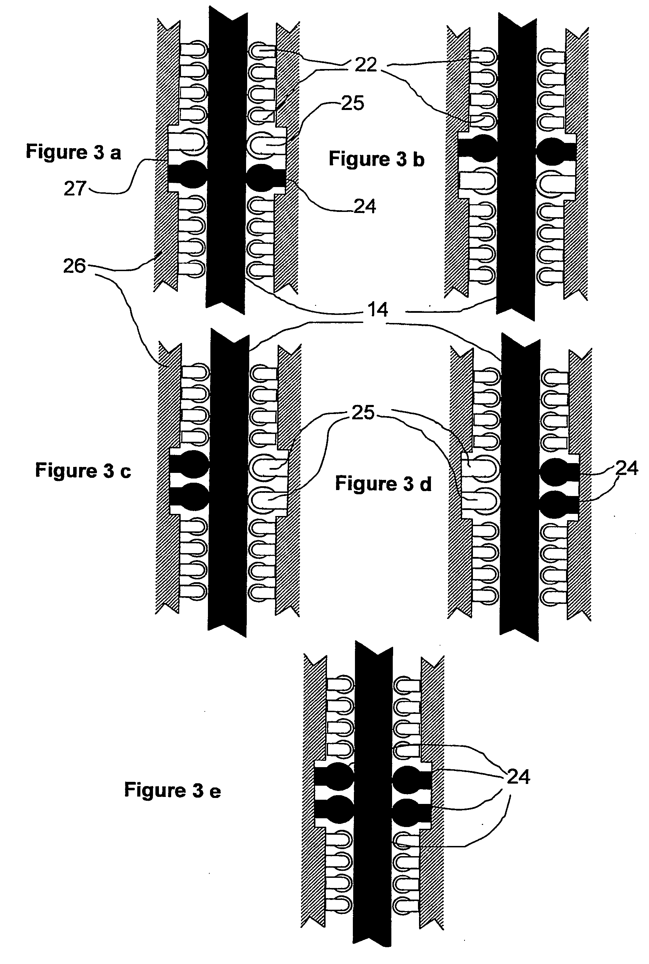

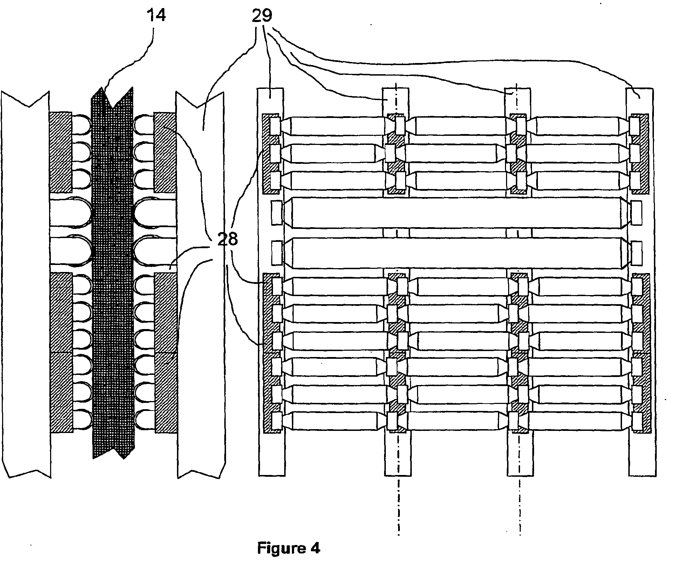

La figure 3 montre schématiquement la structure du segment zéro constituée par de grandes poutres d'appui (26) disposées de part et d'autre des larges faces de la brame et supportant les paliers d'extrémité des rouleaux de soutient (22) et des rouleaux brasseurs (24) ou factices (25). Bien que cela ne soit pas représenté sur la fig.3, les rouleaux de soutien (22) peuvent en outre être supportés en un ou deux endroits de leur longueur par des paliers intermédiaires (voir figure 4). La figure 3 montre une partie du segment zéro de forme verticale droite, mais il est sous-entendu que cette partie pourrait aussi bien être courbe.

La figure 3 montre les cinq configurations de brassage qui peuvent être réalisées avec le même segment zéro: le brassage avec une paire de rouleaux brasseurs face à face (24) dans deux positions différentes (figure 3a et 3b), le brassage avec une paire de rouleaux brasseurs côte à côte (figure 3c et 3d) et le brassage avec deux paires de rouleaux brasseurs groupés (figure 3 e). Les quatre premières configurations des figures 3a à 3d utilisent, en plus d'une paire de rouleaux brasseurs (24), une paire de rouleaux factice (25) de même diamètre. On obtient ainsi une très grande flexibilité dans le choix d'un brassage à champ magnétique soit concentré à travers l'épaisseur de brame (figures 3 a et b), ou diminué à travers la brame mais appliqué sur une plus grande longueur (figure 3c et d) et un brassage extrêmement puissant (figure 3e).

La figure 3 montre également que les poutres d'appui (26) pour les paliers des rouleaux doivent être reusinés avec une encoche (27) à l'endroit d'insertion des rouleaux à diamètre D plus grand et qu'une fois cette modification exécutée, la position des rouleaux-brasseurs (et rouleaux factices) ne pourra plus être modifiée.

La figure 4 finalement montre une conception de la structure du segment zéro selon laquelle la poutre principale d'appui (26) est divisée en (i) une pluralité de semelles (28) servant chacune à regrouper trois rouleaux de soutient (22), et (ii) une poutre principale (29) servant d'appui et de fixation pour les semelles (28).

Etant donné que la longueur des semelles est identique à l'espace sans semelle pris par deux rouleaux-brasseurs/rouleaux factices, l'emplacement de ces dernières peut facilement être changé contre une semelle par démontage/remontage sans qu'il soit nécessaire de re-fabriquer un nouveau segment zéro. On aura ainsi obtenu la possibilité de réadapter la position du brassage électromagnétique et d'optimiser les résultats métallurgiques lorsque des conditions de coulée et notamment la vitesse de coulée auront été changées pour des raisons de modification des conditions d'exploitation.

On notera que les semelles (28), comme la surface de la poutre principale (29), sont représentées en rectiligne alors qu'ils peuvent être courbe. On notera également, que la hauteur des semelles (28) est au moins égale à la profondeur d'encoche (27) (ou à la différence de hauteur de l'ensemble rouleau plus palier entre rouleau-brasseur (24) et rouleau de soutien (22). Elle est égale si les rouleaux-brasseurs/rouleaux factices sont directement fixés sur la poutre principale (29). Elle est supérieure si les rouleaux-brasseurs/rouleaux factices sont également montés sur une semelle.

Il va de soi que l'invention ne saurait se limiter aux exemples décrits ci-avant, mais qu'elle s'étend à de multiples variantes et équivalents dans la mesure où est respectée sa définition donnée par les revendications qui suivent.

## Revendications

1. Procédé de coulée continue de brames métalliques dans lequel on verse du métal en fusion dans une lingotière (10) dont on extrait en continu vers le bas le produit coulé (14) solidifié extérieurement que l'on guide à l'aide d'une batterie de rouleaux de soutien (22) de la zone du refroidissement secondaire (12) dotée d'un segment "zéro" qui s'étend sur une distance de 3 à 4 m environ directement depuis la sortie de la lingotière, et dans laquelle on soumet ledit produit coulé à un brassage électromagnétique par champ magnétique glissant au moyen d'au moins deux rouleaux-brasseurs (24) présents au sein de ladite batterie de rouleaux de soutien (22) et générant des champs magnétiques glissant dans le même sens, **caractérisé en ce que** lesdits rouleaux brasseurs (24) sont situés dans ledit segment zéro (20) de la zone de refroidissement secondaire (12), et **en ce que** le diamètre D desdits rouleaux-brasseurs (24) satisfait approximativement l'équation: 2D + e = 3d + 2 e, où "d" est le diamètre desdits rouleaux de soutien (22) et "e" est l'espace libre entre deux rouleaux consécutifs.

2. Procédé selon la revendication 1, dans lequel lesdits rouleaux-brasseurs (24) sont placés au même niveau en hauteur, face à face, chacun sur une grande face du produit métallique coulé (14).

3. Procédé selon la revendication 1, dans lequel lesdits rouleaux-brasseurs (24) sont voisins l'un de l'autre, côte à côte sur la même grande face du produit métallique coulé (14).

4. Procédé selon la revendication 1, dans lequel on utilise deux paires de rouleaux-brasseurs (24) groupées, placées au même niveau en hauteur, chacune sur une grande face du produit métallique (14).

5. Procédé selon une quelconque des revendications 2 à 4, **caractérisé en ce que** l'on modifie ledit segment zéro (20) de façon à pouvoir insérer dans la batterie de rouleaux de soutien (22) quatre rouleaux dudit diamètre D dont au moins deux sont des rouleaux brasseurs et dont deux au plus sont des rouleaux factices, lesdits quatre rouleaux étant placés groupés au même niveau en hauteur, deux sur chaque grande face du produit métallique coulé (14).

6. Procédé selon l'une quelconque des revendications précédentes, dans lequel le produit coulé (14) est un acier inoxydable, ou un acier au silicium.

7. Installation de coulée continue de brames métalliques comprenant une lingotière (10) suivie par une zone de refroidissement secondaire (12) formée de segments successifs constitués de batteries de rouleaux de soutien, dont un segment "zéro" (20) s'étendant sur une distance de 3 à 4 m environ directement depuis la sortie de la lingotière, **caractérisée en ce que** ledit segment zéro comprend au moins deux rouleaux-brasseurs (24), et **en ce que** le diamètre D desdits rouleaux-brasseurs (24) satisfait approximativement l'équation: 2D + e ≈ 3d + 2e, où "d" est le diamètre desdits rouleaux de soutien (22) et "e" est l'espace libre entre deux rouleaux.

8. Installation selon la revendication 7, **caractérisée en ce que** lesdits rouleaux-brasseurs (24) sont placés au même niveau en hauteur, face à face, chacun sur une grande face de la brame coulée (14).

9. Installation selon la revendication 7, **caractérisée en ce que** lesdits rouleaux-brasseurs (24) sont situés côte à côte sur la même grande face de la brame coulée (14).

10. Installation selon la revendication 7, **caractérisée par** la présence de deux paires de rouleaux-brasseurs (24) voisins, groupées et placées au même niveau en hauteur, chacune sur une grande face de la brame coulée (14).

11. Installation selon une quelconque des revendications 7 à 10 **caractérisée en ce que** ledit segment zéro (20) a été modifié de façon à pouvoir insérer dans la batterie des rouleaux de soutien (22) quatre rouleaux dudit diamètre D dont au moins deux sont des rouleaux brasseurs et dont deux au plus sont des rouleaux factices, les quatre étant placés groupés au même niveau en hauteur, deux sur chaque grande face de la brame coulée (14).

12. Installation selon la revendication 11, **caractérisée en ce que** au moins un ensemble groupé de trois rouleaux de soutien (22), situé au-delà et en dessous dudit groupe des quatre rouleaux à diamètre D (24, 25), est fixé sur une semelle intermédiaire (28) en appui sur la poutre principale (29) et de façon démontable afin de pouvoir échanger la position dudit groupe des quatre rouleaux à diamètre D (24, 25) avec celle dudit ensemble de trois rouleaux de soutien.

## Claims

1. Process for the continuous casting of metallic slabs, in which molten metal is poured into a mold (10), from which the externally solidified cast product (14) is continuously extracted downstream and guided by using a battery of support rolls (22) in the secondary cooling zone (12) provided with a segment "zero" which extends about of 3 to 4 m directly downstream at the end of the mold, and in which said cast product (14) is subjected to electromagnetic stirring by travelling magnetic field by means of at least two stirrer-rolls (24) that are present within said battery of support rolls (22) and that generate magnetic fields travelling in the same direction, **characterized in that** said stirrer-rolls (24) are located in said segment "zero" (20) of the secondary cooling zone (12), and **in that** the diameter D of said stirrer-rolls (24) approximately satisfies the equation: 2D + e = 3d + 2e, where "d" is the diameter of said support rolls (22) and "e" is the free space between two consecutive rolls.

2. Process according to claim 1, in which said two stirrer-rolls (24) are placed at the same level, facing each other, each one on a broad face of the metal product (14).

3. Process according to claim 1, in which said two stirrer-rolls (24) are adjacent, side by side on the same broad face of the metal product (14).

4. Process according to claim 1, in which two pairs of stirrer-rolls (24) are used, these being placed in a group at the same level, each on a broad face of the metal product (14).

5. Process according to any one of Claims 2 to 4, **characterized in that** said segment zero (20) is modified so as to be able to insert, into the battery of support rolls (22), four rolls of said diameter D, including at least two stirrer-rolls and at most two dummy rolls, said four rolls being placed in a group at the same level, two on each broad face of the cast product (14).

6. Process according to any one of the preceding claims, in which the cast product (14) is a stainless steel or a silicon steel.

7. Plant for the continuous casting of metallic slabs, comprising a mold (10) followed with a secondary cooling zone (12) formed from successive segments consisting of batteries of support rolls, one of them being a segment "zero" which extends about of 3 to 4 m directly downstream at the end of the mold, **characterized in that** segment "zero" (20) includes at least two stirrer-rolls (24), and **in that** the diameter D of said stirrer-rolls (24) approximately satisfies the equation: 2D + e = 3d + 2e, where "d" is the diameter of said support rolls (22) and "e" is the free space between two rolls.

8. Plant according to claim $7, **characterized in that** said stirrer-rolls (24) are placed at the same level, facing each other, each one on a broad face of the cast slab (14).

9. Plant according to claim 7, **characterized in that** said stirrer-rolls (24) are adjacent, side by side on the same broad face of the cast slab (14).

10. Plant according to claim 7, **characterized by** the presence of two pairs of adjacent stirrer-rolls (24) placed as a group at the same level, each on a broad face of the metal product (14).

11. Plant according to any one of claims 7 to 10, **characterized in that** said segment zero (20) is modified so as to be able to insert, into the battery of support rolls (22), four rolls of said diameter D, including at least two stirrer-rolls and at most two dummy rolls, the four being placed in a group at the same level, two on each broad face of the metal product (14).

12. Plant according to claim 11, **characterized in that** at least one set of three support rolls (22) located beyond and below the group of four rolls (24, 25) of diameter D, is grouped together, bearing on and fastened to an intermediate baseplate (28) which itself bears on the main beam (29) and is removably fastened so as to be able to exchange the position of the group of four rolls (24, 25) of diameter D with the position of any set of three support rolls.

## Patentansprüche

1. Verfahren zum Stranggießen von Metallbrammen, bei dem geschmolzenes Metall in eine Kokille (10) gegossen wird, aus der das gegossene, außen verfestigte Produkt (14) durchgehend nach unten entnommen wird, das mit Hilfe eines Satzes von Stützwalzen (22) der Zone der sekundären Kühlung (12) geführt wird, die mit einem Segment "Null" versehen ist, das sich über eine Strecke von etwa 3 bis 4 m direkt vom Ausgang der Kokille erstreckt, und in der das gegossene Produkt einer induktiven Badbewegung durch gleitendes Magnetfeld mittels mindestens zweier Umwälzrollen (24) unterzogen wird, die innerhalb des Satzes von Stützrollen (22) vorhanden sind und in gleicher Richtung gleitende Magnetfelder erzeugen, **dadurch gekennzeichnet, dass** die Umwälzrollen (24) sich im Nullsegment (20) der Zone sekundärer Kühlung (12) befinden, und dass der Durchmesser D der Umwälzrollen (24) in etwa die Gleichung 2D + e ≈ 3d + 2e erfüllt,wobei "d" der Durchmesser der Stützrollen (22)und "e" der Freiraum zwischen zwei aufeinanderfolgenden Rollen ist.

2. Verfahren nach Anspruch 1, bei dem die Umwälzrollen (24) in gleicher Höhe einander gegenüber jede auf einer großen Seite des gegossenen metallischen Produkts (14) angeordnet sind.

3. Verfahren nach Anspruch 1, bei dem die Umwälzrollen (24) Seite an Seite auf der gleichen großen Seite des gegossenen metallischen Produkts (14) einander benachbart sind.

4. Verfahren nach Anspruch 1, bei dem zwei gruppierte Paare von Umwälzrollen (24) verwendet werden, die auf gleicher Höhe jedes auf einer großen Seite des metallischen Produkts (14) angeordnet sind.

5. Verfahren nach einem der Ansprüche 2 bis 4, **dadurch gekennzeichnet, dass** das Nullsegment (20) so verändert wird, dass in den Satz von Stützrollen (22) vier Rollen des Durchmessers D eingefügt werden können, von denen mindestens zwei Umwälzrollen sind und von denen höchstens zwei Scheinrollen sind, wobei die vier Rollen gruppiert auf gleicher Höhe angeordnet sind, zwei auf jeder großen Seite des gegossenen metallischen Produkts (14).

6. Verfahren nach einem der vorhergehenden Ansprüche, bei dem das gegossene Produkt (14) ein rostfreier Stahl oder ein Siliciumstahl ist.

7. Stranggießanlage von Metallbrammen, die eine Kokille (10) gefolgt von einer Zone sekundärer Kühlung (12) enthält, die von aufeinanderfolgenden Segmenten geformt wird, die aus Sätzen von Stützrollen bestehen, darunter ein Segment "Null" (20), das sich über eine Strecke von etwa 3 bis 4 m direkt ausgehend vom Ausgang der Kokille befindet, **dadurch gekennzeichnet, dass** das Nullsegment mindestens zwei Umwälzrollen (24) enthält, und dass der Durchmesser D der Umwälzrollen (24) in etwa die Gleichung 2D + e ≈ 3d + 2e erfüllt,wobei "d" der Durchmesser der Stützrollen (22) und "e" der Freiraum zwischen zwei Rollen ist, (wobei "e" im Wesentlichen für die Umwälzrollen (24) und die Stützrollen (22) gleich ist).

8. Anlage nach Anspruch 7, **dadurch gekennzeichnet, dass** die Umwälzrollen (24) in gleicher Höhe einander gegenüber jede auf einer großen Seite der gegossenen Bramme (14) angeordnet sind.

9. Anlage nach Anspruch 7, **dadurch gekennzeichnet, dass** die Umwälzrollen (24) Seite an Seite auf der gleichen großen Seite der gegossenen Bramme (14) angeordnet sind.

10. Anlage nach Anspruch 7, **gekennzeichnet durch** das Vorhandensein von zwei Paaren von benachbarten, gruppierten und auf gleicher Höhe angeordneten Umwälzrollen (24), jedes auf einer großen Seite der gegossenen Bramme (14).

11. Anlage nach einem der Ansprüche 7 bis 10, **dadurch gekennzeichnet, dass** das Nullsegment (20) verändert wurde, um in den Satz von Stützrollen (22) vier Rollen des Durchmessers D einfügen zu können, von denen mindestens zwei Umwälzrollen sind und von denen höchstens zwei Scheinrollen sind, wobei die vier Rollen gruppiert auf gleicher Höhe angeordnet sind, zwei auf jeder großen Seite der gegossenen Bramme (14).

12. Anlage nach Anspruch 11, **dadurch gekennzeichnet, dass** mindestens eine gruppierte Einheit von drei Stützrollen (22), die sich jenseits und unter der Gruppe von vier Rollen mit dem Durchmesser D (24, 25) befindet, auf einer Zwischensohle (28) befestigt ist, die auf dem Hauptbalken (29) aufliegt und ausbaubar ist, um die Position der Gruppe der vier Rollen mit dem Durchmesser D (24, 25) gegen diejenige der Einheit von drei Stützrollen austauschen zu können.
